## Europäisches Patentamt
## European Patent Office
## Office européen des brevets

(19)

(11) Publication number: **0 267 028**
**A2**

(12) # EUROPEAN PATENT APPLICATION

(21) Application number: **87309776.0**

(22) Date of filing: **04.11.87**

(51) Int. Cl.⁴: **H 02 G 15/076**
**H 02 G 15/18**

(30) Priority: **05.11.86 GB 8626429**

(43) Date of publication of application:
**11.05.88 Bulletin 88/19**

(84) Designated Contracting States:
**AT BE CH DE ES FR GB IT LI NL SE**

(71) Applicant: **N.V. RAYCHEM S.A.**
**Diestsesteenweg 692**
**B-3200 Kessel-lo (BE)**

(72) Inventor: **De Bruycker, Erwin**
**100, Summerwinds Drive**
**Cary§North Carolina (US)**

**Nijs, Marc**
**Aarschotsesteenweg 533**
**B-3010 Wilsele (Leuven) (BE)**

(74) Representative: **Benson, John Everett et al**
**Raychem Limited Intellectual Property Law Department**
**Swan House 37-39, High Holborn**
**London WC1 (GB)**

(54) **Closure assembly.**

(57) A closure assembly for enclosing a substrate such as a splice in a telecommunications cable which preferably comprises a base plate and a dome cover therefor, and a heat-recoverable fabric sleeve which can be used to join together the base and dome.

Fig.1a.

Fig.1b.

**EP 0 267 028 A2**

**Description**

<div align="center">

CLOSURE ASSEMBLY

</div>

This invention relates to a re-enterable closure assembly for enclosing an elongate substrate.

The use of closure articles for enclosing and environmentally sealing elongate substrates, for example splices in electrical cables, such as telecommunications or power cables, is well known. A typical enclosure, for an end-to-end splice between cables, comprises a heat-shrinkable polymeric sleeve, having two open ends, which can be shrunk by heating to provide a sealing enclosure.

Another known closure, sold by Raychem under the trade mark Pedcap, forms an enclosure about a butt splice between cables. It comprises a tubular polymeric body having an open and a closed end. The main part of the body is relatively rigid, while the open end is heat shrinkable. The spliced cables are inserted into the closure, through the open end, which is then shrunk to seal to the cables.

The heat recoverable articles of the prior art are typically made from a polymeric material exhibiting the property of elastic or plastic memory, and are described, for example, in US Patent Nos. 2027962; 3086242; and 3957372. In a variation of this idea, as described, for example in British Patent 1,440,524, an elastomeric member such as an outer tubular member is held in a stretched state by a second member, such as an inner tubular hold-out member, which, upon heating weakens and thus allows the elastomeric member to recover. In addition to tubular sleeves, wraparound sleeves have also been developed e.g. as described in US Patent Nos. 3,379,218 and British Patents 1,155,470, 1,211,988 and 1,346,479. Alternatively, the sheet may be held in the wrapped-up configuration during recovery by means of an adhesive which may, in some cases, be applied on site. The disclosures of these patents and other patents and applications mentioned in this specification, are incorporated herein by reference.

Heat recoverable articles based on recoverable fabrics are also known. They are describe din the following patent publications and copending applications: US 3669157 (Carolina Narrow Fabric), European Patent Application Publication Nos. 0116393 (MP0790), 0116391 (RK169), 0117026 (RK176), 0115905 (RK177), 0116392 (RK178), 0116390 (RK179), 0117025 (RK181), 0118260 (RK189), 0137648 (RK205), 0153823 (RK228), 0175554 (RK246), European Patent Application No. 86303767.7 (RK273), British Patent Application Nos. 8528966 (RK289), 8610813 (RK296), 8529800 (B118) and U.S. Patent Application No. 821662 (B121). The disclosure of those applications are incorporated herein by reference.

For some closure articles it is desirable that the closure can easily be reopened, and then reclosed. This is known as re-entry. Thus, for example, where the closure encloses a splice between cables, it may be desirable that the closure can be temporarily reopened, either for repair work, or to modify the splice.

One example of a re-enterable splice closure is described in GB 2093402B. This described a heat shrinkable sleeve and an inner laminate liner, part of which can be reused after re-entry. The sleeve is cut to re-enter the sleeve.

The provision of a self contained cutting means in a heat recoverable polymeric article, to cut open the article after recovery, is described in UK 1604380. This cutting means can be used to re-enter the article. The cutting means described is a thin wire positioned within the article, which can be pulled to slice a cut in the sleeve.

A butt-splice closure sold by Raychem Corporation in the USA under the Trade Mark PEDCAP is also re-enterable. The wall of the Pedcap closure is sufficiently thin that it can be cut by a knife to expose the underlying splice. The cut closure is resealed using a tubular polymeric heat-shrinkable sleeve which is shrunk over the cut-line.

Two types of closure need to be distinguished, pressurised closures and un-pressurised closures. For some applications for example, for enclosing some splices between telecommunications cables, the closure must be capable of retaining an internal pressure. In some cases pressure is applied continuously to act as an additional resistance to moisture or other ingress, and in other cases pressure is applied temporarily, in so-called "flash tests" in order to test the effectiveness of the seal provided by the enclosure. In other applications, for example in aerial closures, the closure is subject to fluctuating temperatures and hence fluctuating internal pressures. In general an enclosure which is to be pressurised has to withstand more stringent tests than an unpressurised closure, and form a tighter seal.

We have discovered an improved re-enterable closure. The closure is cut for reentry, and then the cut- line is re-sealed using a heat recoverable fabric. The closure can, if desired, be used in pressurised applications.

A first aspect of the present invention provides a re-enterable closure assembly for enclosing a elongate substrate, comprising:

(a) a cover for enclosing the substrate, which cover can be cut open to expose the substrate; and

(b) a heat-recoverable fabric sleeve which can be recovered onto the cover to seal the cut.

Preferably the cut parts of the cover can be used again to re-close the closure. Thus after reentry, and work or modification on the enclosed substrate, the cut parts of the cover are reassembled relative to each other and then the fabric recovered over the cut.

The cut for re-entry preferably separates the cover into two discrete parts to give maximum room for manouvre within the cover. Alternatively the cover may be cut only so as to provide a gap in the cover through which repair or modification of the assembly is effected.

Preferably the cover is in the form of a tube. Preferably the tube is open at one end and closed at the other end. such a cover provides a closure suitable for enclosing a butt splice between two or more cables which enter at the open end. Preferably the open end of the tube is heat shrinkable and is shrunk to form a seal to the entered cables. A clip as described in GB 1604981 (B036) is preferably used to form a branch-off seal between the entering cables. The disclosure of GB 1604981 is incorporated herein by reference. The remainder of the tube is preferably heat stable. It is preferably spaced slightly from the underlying substrate. This means that the cover can be easily cut away to reveal the substrate without damage to the substrate, and also means that the cut portions can be re-used to reseal the closure. Preferably the cover, other than at the open end is rigid.

Preferably the cover has a thick wall over most of its surface. Preferably the thickness is at least 2 mm, more preferaly at least 2.5 mm. This thickness improves the ability of the cover to withstand an internal pressure, making the closure particularly suitable for pressurised applications including continuously pressurised closures, and aerial closures.

Preferably a predetermined cut-line is provided along which the cover can preferentially be cut. Preferably the cover is less thick along the cut-line so that the cover can preferentially be cut along the cut-line. Preferably the cover has a thickness less than 1.5 mm, more preferably less than 1 mm along the cut line.

Preferably the thickness of the cover along the cut-line is sufficiently thin to enable it to be cut by hand using a knife. Preferably the thickness of the cover other than at the cut-line is too thick to be cut, by hand, by a knife. Where the cover is tubular the cut-line preferably extends around the circumference of the tube, preferably the entire way around the circumference.

The cover may be made from any suitable material. Preferably it comprises a polyolefin, preferably polyethylene.

The cover may be made by any suitable technique. Preferably the cover is made by moulding. Moulding is particularly convenient since it enables a cover of varying wall thickness to be made, including a thinner wall at the predetermined cut line.

After the assembly has been reentered, and the required work done on the underlying substrate, it is necessary to reclose the enclosure. This is done using the recoveable fabric. This is recovered over the cut to reseal the enclosure.

Heat recoverable fabrics have been found particularly effective in withstanding pressure, and the use of fabric here makes the reclosed cover suitable for use inter alia in pressurised applications. Also heat recoverable fabrics have been found to be particularly resistant to splitting. This makes the invention particularly applicable for applications in which re-entry is carried out under severe heating, or uneven heating conditions. Such conditions may exist, for example in the torch installation of an aerial closure when wind and other adverse conditions may make it desirable to install the closure using a very hot flame.

The heat recoverable fabric sleeve is preferably tubular, and radially shrinkable. It preferably contains heat-shrinkable fibres which extend around the circumference of the tube. Heat shrinkable or heat stable fibres may extend along the length of the sleeve.

The sleeve preferably has a cross-section slightly larger than that of the cover, so that it can easily be positioned over the cover, over the cut and then shrunk into place.

Any suitable material may be used for the recoverable fabric. Particularly preferred materials are those described in European Patent Publication No. 0116393 (MP0790).

The fabric sleeve preferably contains self contained cutting means, preferably in the form of a thin wire, arranged to cut open the fabric after recovery of the fabric. This is provided in order to allow second re-entry of the closure. Thus for second re-entry the wire is pulled to slit the recovered fabric, the fabric removed, and the parts of the cover (cut during the first re-entry) separated to reexpose the substrates. Subsequent reclosure is then done using a new-recoverable fabric sleeve, which preferably also contains self contained cutting means to allow third re-entry, and so on.

Preferably the self contained cutting means is provided as a loop which passes along the length of the sleeve both inside and outside the fabric sleeve, and is thereby interlinked with the sleeve. This attaches the cutting means to the fabric sleeve and means the cutting means cannot become lost, or, for example, drop-out during installation.

Preferably an additional strip, or flap, of material extends along the inside of the fabric sleeve along its length. Preferably the flap is attached along one of its edges to the fabric sleeve. Preferably the self contained cutting means extends between the flap and the fabric sleeve. The flap preferably comprises a polymeric material, coated at least on one side, and preferably on both sides, with a heat activatable, preferably hot melt adhesive. The polymeric material of the flap preferably comprises a material that does not melt at the recovery temperature of the fabric. Preferably it comprises a cross-linked polymeric material. Preferably it is an EVA based, cross-linked polymeric material. The heat-activatable adhesive of the flap, preferably comprises a hot melt adhesive, it preferably melts at or just below the recovery temperature of the fabric sleeve. On recovery of the fabric the flap isolates the interior of the sleeve from the wire. This is advantageous since it prevents the wire providing a leak path into and out of the sleeve. Thus ingress of moisture to the enclosed substrate is prevented, since although moisture may pass along the wire it is prevented from reaching the enclosed substrate by the flap. Also in pressurised applications the flap prevents the pressurising air contacting the wire, and thus avoids the wire acting as a leak path for escape of the pressurising air.

Preferably the entire inner surface of the fabric sleeve is coated with a thin layer of heat activatable, preferably hot melt adhesive, to secure it to the cover on recovery. In this case the flap which may also include heat-activatable adhesive is additional, and is secured to the inner adhesive lining of the fabric sleeve.

Preferably the thickness of the flap is at least 1 mm.

The fabric sleeve may be fabricated as a tube or may be made as a flat sheet and wrapped around to form a wraparound sleeve, longitudinal edges of which can be held together by a closure. Preferably the longitudinal edges are overlapped and held together in any suitable way, for example by stitching.

In the case of a wraparound fabric sleeve, where a self cutting means is provided together with an additional flap to sandwich the cutting means between it and the sleeve, the cutting means and flap are preferably provided under the closure. This allows the flap to provide a dual function, first preventing the self-cutting means acting as a leak path, and secondly sealing under the closure line of wraparound sleeve. Alternatively the cutting means may be positioned other than at the closure line of the wraparound fabric, and two flaps provided, to provide each of the functions.

The closure assembly according to the invention preferably includes an annular insert. This is positioned within the closure after re-entry in order to aid the reclosure. The insert is positioned within the cover to provide a support onto which the fabric can be recovered. Preferably the provision of an insert substantially prevents deformation of the cover parts on recovery of the fabric sleeve.

Preferably the insert comprises a locating means, preferably a ridge. Where the insert is annular the ridge preferably extends around the circumference of the annular piece. This helps to locate the cut apart portions of the cover during reassembly. For example, when a generally tubular cover is cut into two pieces by a circumferential cut, the two cut pieces can be reassembled with the insert inside so that the ridge or other locating means lies between the two cover pieces, along the original cut-line, and the cut edges of both the cut pieces abut the ridge.

The insert is preferably resilient biased outwards. Preferably it is in the form of a split annular ring, which in its rest position has a diameter larger than the diameter of the cover (for a tubular cover). It then exerts a resilient force outwards on the cover portions. The resilient bias of the insert and also the locating means on the insert helps to hold the reassembled cover portions in the correct position while the fabric sleeve is correctly positioned and shrunk into place.

The use of an insert which helps to locate and hold the cover portions in place is particularly desirable for applications in which it is difficult to work on the enclosure, for example for enclosures in restricted areas, or for aerial enclosures in which work to the enclosure must be carried out on ladders or cranes.

The invention also provides a butt splice between two or more cables enclosed by an assembly according to the invention.

The invention also provides a method of re-entering and reclosing an assembly according to the invention comprising:

(a) cutting open the cover along a cut-line to expose the substrate;

(b) relocating the portions of the cover relative to each other; and

(c) recovering the fabric sleeve over the cut-line to reclose and seal the closure assembly.

The invention also provides a second assembly. The second assembly is suitable for re-closing an enclosure which comprises a cover that has been cut-open, and comprises:

(a) a heat recoverable fabric cover which can be recovered onto the cover to seal the cut-line and

(b) an annular insert which can be inserted in the cut-open cover, to provide a support onto which the fabric sleeve can be recovered.

The preferred features described for the insert and fabric sleeve of the assembly according to the first aspect of the invention are also preferred for the second assembly according to the invention.

Embodiments of the invention will now be described, by way of example, with reference to the accompanying drawings, wherein:

Figures 1a and 1b are perspective views showing a cover of a closure system according to the invention being opened;

Figure 2 is a perspective view which shows a fabric sleeve and insert of a closure assembly according to the invention for reclosing the opened cover of Figure 1.

Figure 3 is a perspective view which shows the cover of Figure 1, reclosed by the fabric and insert pieces of Figure 2; and

Figure 4 is a cross-sectional view through lines IV of Figure 3.

Referring to the drawings Figure 1a shows a polyolefin cover 2 enclosing a butt splice 4 between two cables 6. The cover 2 has a closed end 8, and another end 10 through which cables 6 have passed. The end 10 comprises a heat shrinkable polymeric material which has been heat shrunk about the entering cables 6. A clip 12 as described in GB Patent No. 1604981 is used to form a branch-off seal in the crutch region between the cables 6.

The cover 2 has a predetermined cut-line 14. Along this line the thickness of the cover is about 1 mm. This is less than the thickness in the remainder of the cover which is about 2.5 mm. This is seen in Figure 1a in which the inner surface of the cover 2 is represented in dotted lines.

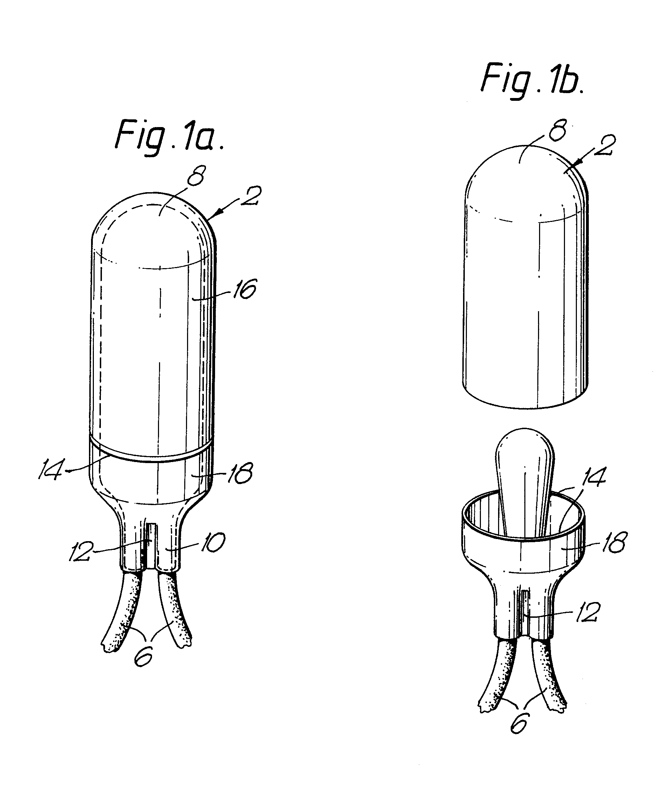

The cover 2 can be xut by hand with a knife along line 14. This separates the cover 2 into two discrete parts 16 and 18. Parts 16 and 18 can be pulled apart to expose splice 4. Necessary repair or modification to splice 4 can then be done (Figure 1b).

It is then necessary to reclose the closure assembly.

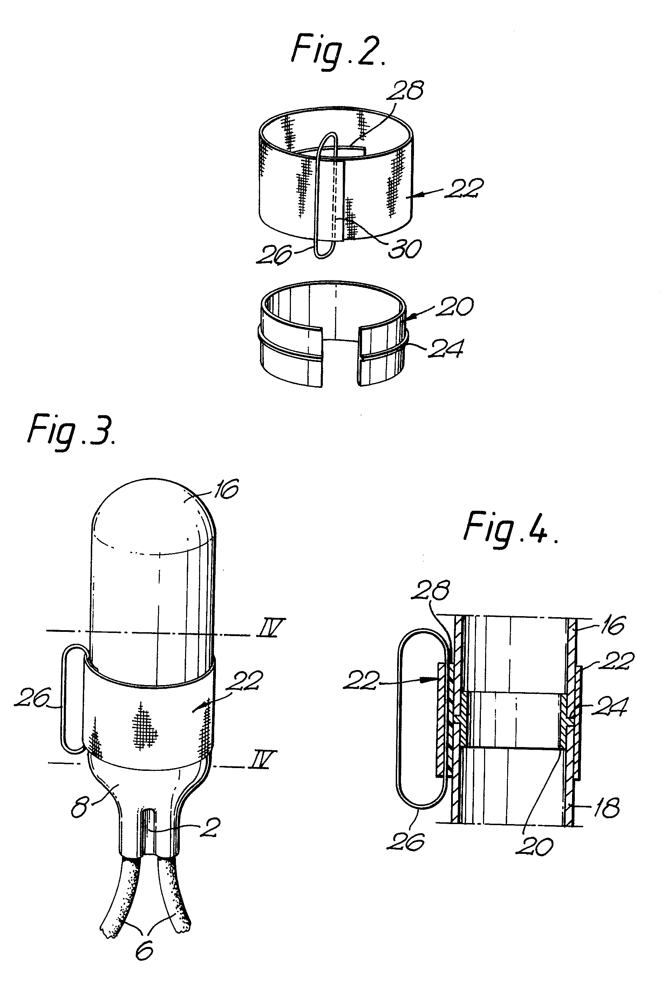

Figure 2 shows an insert 20 and fabric sleeve 22, which are used to effect the reclosure. The insert 20 is a split annulus, and resilient. In its rest position the diameter of the annulus is greater than that of cover 2. The insert 20 comprises a ridge 24 which protrudes from the insert and extends around the circumference of the insert. Sleeve 22 comprises a recoverable fabric sleeve in the form of a wrapped fabric sheet, edges 26 of which have been overlapped and stitched together. The fabric sleeve is lined with a layer of hot melt adhesive (not shown). An elongate strip or flap 28 entends along the inner surface of fabric sleeve 22 beheath the overlapped edges 26. The flap 28 is secured along one of its edges to the inner surface of sleeve 22. Flap 28 comprises an EVA based cross-linked polymeri material coated on both sides with a hot melt adhesive. A loop of steel wire 30 is interlooped with the fabric sleeve. It lies between flap 28 and the fabric 22.

Figures 3 and 4 show reclosure of the cover of Figure 1b using the insert and fabric sleeve of Figure 2. To reclose: the insert 20 is compressed so that it fits within the cover pieces 16 and 18, and the cut edges 14 of cover parts 16 and 18 are abutted against ridge 24 on the insert this relocates pieces 16 and 18 of the cover (Figure 4). The resilient force of the insert 20 pushing outwards on the cover pieces 16 and 18 retains the pieces in position even if the closure is in a non-upright position, or is in wind or other adverse conditions. This allows the operator to work on the fabric sleeve 22.

Fabric sleeve 22 has a diameter greater than that of cover 2. It is positioned over the cover 2 to cover cut-line 14, then heated, for example with a torch. The fabric shrinks, the lining of adhesive melts and the fabric is bonded to the cover portions 16 and 18 and the cut-line 14 is thereby sealed. The adhesive on flap 28 flows around wire 26. The flap 28 prevents there being any leak path along the wire. Thus there is no moisture ingress along the wire, or, for a pressurised closure, air egress along the wire.

It is noted that the branch-out region at end 10 of the cover 2 is unaffected by the re-entry procedure.

For a second re-entry the wire 26 is pulled to slit fabric 22, and the fabric 22 pulled away. Cover parts 16 and 18 can then be pulled apart, insert 20 removed and the necessary work on splice 4 done. Second reclosure may be done using the original insert 20 and a new sleeve 22.

Typical covers according to the invention are tubular having a diameter in the range 60 - 170 mm, and a length in the range 75 - 165 mm.

## Claims

1. A re-enterable closure assembly for enclosing an elongate substrate, comprising:
    (a) a cover for enclosing the substrate, which cover can be cut open to expose the substrate; and
    (b) a heat-recoverable fabric sleeve which can be recovered onto the cover to seal the cut.

2. An assembly according to claim 1, wherein the cover is reuseable, such that after the cover has been cut open, the cut parts can be reassembled, together with the fabric sleeve to re-enclose the substrate.

3. An assembly according to claim 1 or 2, which additionally comprises:
    (c) an annular insert which can be positioned in the cut-open cover, to provide a support onto which the fabric sleeve can be recovered.

4. An assembly according to any preceding claim, wherein the cover comprises a tube, which is arranged to be cut along only a predetermined cut-line, the thickness of the tube being less along the predetermined cut-line than in the remainder of the tube.

5. An assembly according to any preceding claim, wherein the cover comprises a tube which is closed at one end and open at the other end.

6. An assembly according to claim 5, wherein the open end of the tubular cover is heat shrinkable.

7. An assembly according to claim 6, which is suitable for enclosing a butt splice between two or more cables entering the cover via the open end, wherein one or more clips are provided to be positioned over the end of the sleeve, between adjacent cables, to form a branch-off seal between the cables.

8. An assembly according to any preceding claim, wherein the fabric sleeve has self-contained cutting means arranged to cut open the fabric after heat recovery of the fabric, which cutting means preferably comprises a thin wire.

9. An assembly according to claim 3, or any claim dependant thereon, wherein the insert comprising a locating means to relocate the cut open portions of the cover relative to each other.

10. A butt splice between two or more cables enclosed by an assembly according to any preceding claim.

11. A method of re-entering and re-closing a closure assembly according to any of the claims 1 to 9 comprising:
    (a) cutting open the cover along a cut to expose the substrate;
    (b) relocating the portions of the cover relative to each other; and
    (c) recovery the fabric sleeve over the cut to reclose and seal the closure assembly.

12. An assembly for re-closing an enclosure comprising a cover that has been cut open, the assembly comprising:
    (a) a heat recoverable fabric cover which can be recovered onto the cover to seal the cut and
    (b) an annular insert which can be positioned in the cut-open cover, to provide a support onto which the fabric sleeve can be recovered.

13. An assembly according to claim 12, wherein the insert comprises a locating means to relocate the cut-open portions of the cover relative to each other.

14. An assembly according to claim 12 or 13, wherein the fabric sleeve comprises self-contained cutting means arranged to cut open the

9

0 267 028

10

fabric after heat recovery of the fabric.

0267028

Fig.1a.

Fig.1b.

0267028

**Fig.2.**

**Fig.3.**

**Fig.4.**